(19) Europäisches Patentamt
European Patent Office
Office européen des brevets

(11) Veröffentlichungsnummer: **0 485 823 B1**

(12) # EUROPÄISCHE PATENTSCHRIFT

(45) Veröffentlichungstag der Patentschrift: **08.03.95**

(51) Int. Cl.$^{6}$: **C07F 17/00**, C08F 4/602

(21) Anmeldenummer: **91118682.3**

(22) Anmeldetag: **01.11.91**

(54) **2-Substituierte Bisindenylmetallocene, Verfahren zu ihrer Herstellung und ihre Verwendung als Katalysatoren bei der Olefinpolymerisation.**

(30) Priorität: **12.11.90 DE 4035883**

(43) Veröffentlichungstag der Anmeldung:
**20.05.92 Patentblatt 92/21**

(45) Bekanntmachung des Hinweises auf die Patenterteilung:
**08.03.95 Patentblatt 95/10**

(84) Benannte Vertragsstaaten:
**BE DE ES FR GB IT NL**

(56) Entgegenhaltungen:
**EP-A- 0 344 887**

(73) Patentinhaber: **HOECHST AKTIENGESELL-SCHAFT**
**D-65926 Frankfurt (DE)**

(72) Erfinder: **Winter, Andreas, Dr.**
**Taunusblick 10**
**W-6246 Glashütten (DE)**
Erfinder: **Antberg, Martin, Dr.**
**Sachsenring 10**
**W-6238 Hofheim am Taunus (DE)**
Erfinder: **Spaleck, Walter, Dr.**
**Sulzbacher Strasse 63**
**W-6237 Liederbach (DE)**
Erfinder: **Rohrmann, Jürgen, Dr.**
**Hainpfad 5**
**W-6233 Kelkheim (Taunus) (DE)**
Erfinder: **Dolle, Volker, Dr.**
**Hattersheimer Strasse 15**
**W-6233 Kelkheim (Taunus) (DE)**

EP 0 485 823 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Vorliegende Erfindung betrifft neue in 2-Stellung substituierte Bisindenylmetallocene, die sehr vorteilhaft als Katalysatoren bei der Herstellung von Polyolefinen mit hoher Molmasse verwendet werden können.

Polyolefine mit hoher Molmasse besitzen insbesondere Bedeutung für die Herstellung von Folien, Platten oder Großhohlkörpern wie z.B. Rohre oder Formteile.

Chirale Metallocene sind in Kombination mit Aluminoxanen aktive, stereospezifische Katalysatoren zur Herstellung von Polyolefinen (US 4,769,510). Unter diesen Metallocen befinden sich auch substituierte Indenverbindungen. So ist z.B. die Verwendung des Katalysatorsystems Ethylen-bis(4,5,6,7-tetrahydro-1-indenyl)zirkondichlorid/Aluminoxan zur Herstellung von isotaktischem Polypropylen bekannt; vgl. EP-A 185 918). Sowohl dieses als auch zahlreiche andere zum Stand der Technik zählende Polymerisationsverfahren besitzen insbesondere den Nachteil, daß bei technisch interessanten Polymerisationstemperaturen nur Polymere mit unakzeptabel niedriger Molmasse erhalten werden.

Überraschenderweise wurde nun gefunden, daß neue in 2-Stellung substituierte Bisindenylmetallocene geeignete Katalysatoren zur Herstellung von Olefinpolymeren mit hoher Isotaktizität, enger Molmassenverteilung und hoher Molmasse sind.

Gegenstand der vorliegenden Erfindung sind daher die Verbindungen der nachstehenden Formel I

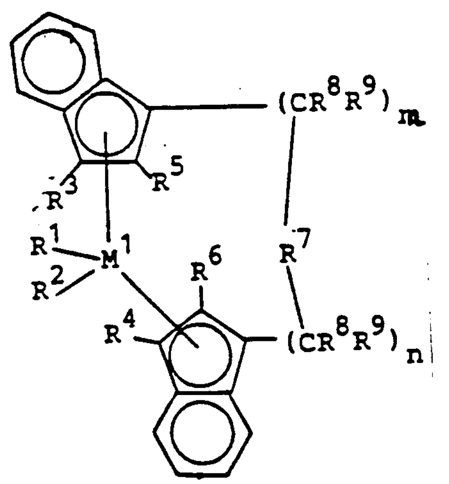

(I)

worin

| | |
|---|---|
| $M^1$ | ein Metall der Gruppe IVb, Vb oder VIb des Periodensystems ist, |
| $R^1$ und $R^2$ | gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten, |
| $R^3$ und $R^4$ | gleich oder verschieden sind und ein Wasserstoffatom, ein Halogenatom, eine $C_1$-$C_{10}$-Alkylgruppe, die halogeniert sein kann, eine $C_6$-$C_{10}$-Arylgruppe, einen $-NR_2^{10}$, $-SR^{10}$, $-OSiR_3^{10}$, $-SiR_3^{10}$ oder $-PR_2^{10}$-Rest bedeuten, worin $R^{10}$ ein Halogenatom, eine $C_1$-$C_{10}$-Alkylgruppe oder eine $C_6$-$C_{10}$-Arylgruppe ist, |
| $R^5$ und $R^6$ | gleich oder verschieden sind und die für $R^3$ und $R^4$ genannte Bedeutung haben, mit der Maßgabe, daß $R^5$ und $R^6$ nicht Wasserstoff sind, |

$R^7$

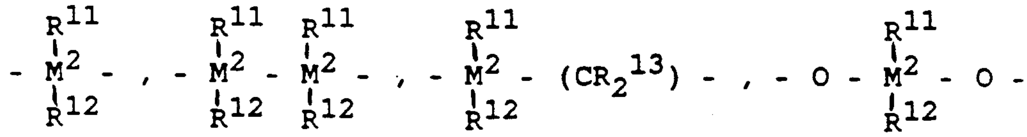

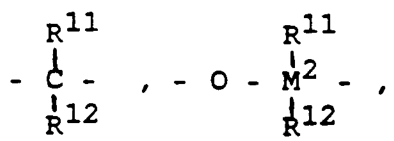

$=BR^{11}$, $=AlR^{11}$, -Ge-, -Sn-, -O-, -S-, $=SO$, $=SO_2$, $=NR^{11}$, $=CO$, $=PR^{11}$ oder $=P(O)R^{11}$ ist,

wobei

$R^{11}$, $R^{12}$ und $R^{13}$ gleich oder verschieden sind und ein Wasserstoffatom, ein Halogenatom, eine $C_1$-$C_{10}$-Alkylgruppe, $C_1$-$c_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden,

$M^2$ Silizium, Germanium oder Zinn ist,

$R^8$ und $R^9$ gleich oder verschieden sind und die für $R^{11}$ genannte Bedeutung haben und

m und n gleich oder verschieden sind und null, 1 oder 2 sind, wobei m plus n null, 1 oder 2 ist.

Alkyl steht für geradkettiges oder verzweigtes Alkyl. Halogen (halogeniert) bedeutet Fluor, Chlor, Brom oder Jod, bevorzugt Fluor oder Chlor.

In Formel I ist $M^1$ ein Metall der Gruppe IVb, Vb oder VIb des Periodensystems, beispielsweise Titan, Zirkon, Hafnium, Vanadium, Niob, Tantal, Chrom, Molybdän, Wolfram, vorzugsweise Zirkon, Hafnium und Titan.

$R^1$ und $R^2$ sind gleich oder verschieden und bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

$R^3$ und $R^4$ sind gleich oder verschieden und bedeuten ein Wasserstoffatom, ein Halogenatom, bevorzugt ein Fluor-, Chlor- oder Bromatom, eine $C_1$-$C_{10}$-, vorzugsweise $C_1$-$C_4$-Alkylgruppe, die halogeniert sein kann, eine $C_6$-$C_{10}$-, vorzugsweise $C_6$-$C_8$-Arylgruppe, einen $-NR_2^{10}$, $-SR^{10}$, $-OSiR_3^{10}$, $-SiR_3^{10}$ oder $-PR_2^{10}$-Rest, worin $R^{10}$ ein Halogenatom, vorzugsweise Chloratom, oder eine $C_1$-$C_{10}$-,vorzugsweise $C_1$-$C_3$-Alkylgruppe oder $C_6$-$C_{10}$-, vorzugsweise $C_6$-$C_8$-Arylgruppe ist. Besonders bevorzugt sind $R^3$ und $R^4$ Wasserstoff.

$R^5$ und $R^6$ sind gleich oder verschieden, bevorzugt gleich, und haben die für $R^3$ und $R^4$ beschriebene Bedeutung, mit der Maßgabe, daß $R^5$ und $R^6$ nicht Wasserstoff sein dürfen. Bevorzugt sind $R^5$ und $R^6$ ($C_1$-$C_4$)-Alkyl, das halogeniert sein kann, wie Methyl, Ethyl, Propyl, Isopropyl, Butyl, Isobutyl oder Trifluormethyl, insbesondere Methyl.

$R^7$ ist

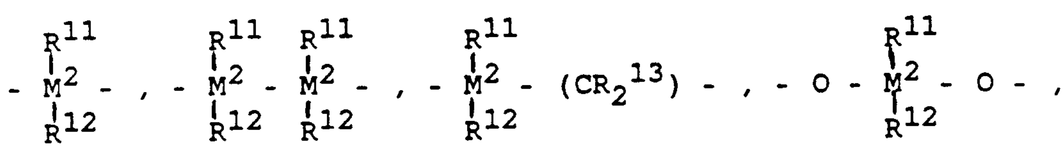

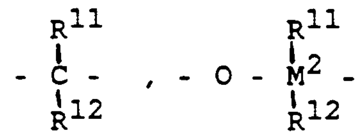

$=BR^{11}$, $=AlR^{11}$, -Ge-, -Sn-, -O-, -S-, $=SO$, $=SO_2$, $=NR^{11}$, $=CO$, $=PR^{11}$ oder $=P(O)R^{11}$, wobei $R^{11}$, $R^{12}$ und $R^{13}$ gleich oder verschieden sind und ein Wasserstoffatom, ein Halogenatom, eine $C_1$-$C_{10}$-, vorzugsweise $C_1$-$C_4$-Alkylgruppe, insbesondere Methylgruppe, eine $C_1$-$C_{10}$-Fluoralkylgruppe, vorzugsweise $CF_3$-Gruppe, eine $C_6$-$C_{10}$-, vorzugsweise $C_6$-$C_8$-Arylgruppe, eine $C_6$-$C_{10}$-Fluorarylgruppe, vorzugsweise Pentafluorphenylgruppe, eine $C_1$-$C_{10}$-, vorzugsweise $C_1$-$C_4$-Alkoxygruppe, insbesondere Methoxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_8$-$C_{40}$-, vorzugsweise $C_8$-$C_{12}$-Arylalkenylgruppe oder eine $C_7$-$C_{40}$-, vorzugsweise $C_7$-$C_{12}$-Alkylarylgruppe bedeuten, oder $R^{11}$ und $R^{12}$ oder $R^{11}$ und $R^{13}$ bilden jeweils zusammen mit den sie verbindenden Atomen einen Ring.

$M^2$ ist Silizium, Germanium oder Zinn, bevorzugt Silizium und Germanium.

$R^7$ ist vorzugsweise $-CR^{11}R^{12}$, $=SiR^{11}R^{12}$, $=GeR^{11}R^{12}$, -O-, -S-, $=SO$, $=PR^{11}$ oder $=P(O)R^{11}$.

$R^8$ und $R^9$ sind gleich oder verschieden und haben die für $R^{11}$ genannte Bedeutung.

m und n sind gleich oder verschieden und bedeuten null, 1 oder 2, bevorzugt null oder 1, wobei m plus n null, 1 oder 2, bevorzugt null oder 1 ist.

Somit sind die besonders bevorzugten Metallocene solche, bei denen in Formel I $M^1$ Zr oder Hf, $R^1$ und $R^2$ gleich oder verschieden sind und Methyl oder Chlor, $R^3$ und $R^4$ Wasserstoff, $R^5$ und $R^6$ gleich oder verschieden sind und Methyl, Ethyl oder Trifluormethyl, $R^7$ einen Rest

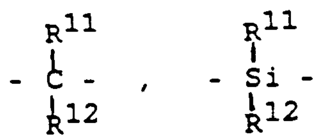

und n plus m null oder 1

bedeuten; insbesondere die in den Ausführungsbeispielen aufgeführten Verbindungen I.

Unter den in den Ausführungsbeispielen genannten Verbindungen I besitzen rac-Dimethylsilyl(2-methyl-1-indenyl)$_2$zirkondichlorid, rac-Ethylen(2-methyl-1-indenyl)$_2$-zirkondichlorid, rac-Dimethylsilyl(2-methyl-1-indenyl)$_2$zirkondimethyl und rac-Ethylen(2-methyl-1-indenyl)$_2$-zirkondimethyl besondere Bedeutung.

Die chiralen Metallocene werden als Racemat zur Herstellung von hochisotaktischen Poly-1-olefinen eingesetzt. Verwendet werden kann aber auch die reine R- oder S-Form. Mit diesen reinen stereoisomeren Formen ist ein optisch aktives Polymeres herstellbar. Abgetrennt werden sollte jedoch die meso-Form der Metallocene, da das polymerisationsaktive Zentrum (das Metallatom) in diesen Verbindungen wegen Spiegelsymmetrie am Zentralmetall nicht mehr chiral ist und daher kein hochisotaktisches Polymeres erzeugen kann. Wird die meso-Form nicht abgetrennt, entsteht neben isotaktischen Polymeren auch ataktisches Polymer. Für bestimmte Anwendungen - weiche Formkörper beispielsweise - kann dies durchaus wünschenswert sein.

Die Trennung der Stereoisomeren ist im Prinzip bekannt.

Gegenstand der vorliegenden Erfindung ist ferner ein Verfahren zur Herstellung der Metallocene I, dadurch gekennzeichnet, daß man eine Verbindung der Formel II

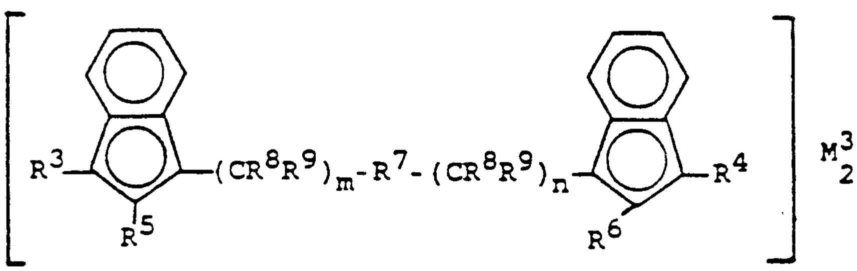

(II),

wobei $R^3$-$R^9$, m und n die in Formel I beschriebene Bedeutung haben und $M^3$ ein Alkalimetall, bevorzugt Lithium, bedeutet,

a) mit einer Verbindung der Formel III

$M^1X_4$ (III),

worin $M^1$ die in Formel I genannte Bedeutung besitzt und X ein Halogenatom, bevorzugt Chlor, bedeutet, oder

b) mit einer Verbindung der Formel IIIa

$M^1X_4L_2$ (IIIa),

worin $M^1$ und X die genannten Bedeutungen besitzen und L für einen Donorliganden steht, umsetzt und das erhaltene Reaktionsprodukt gegebenenfalls derivatisiert.

Geeignete Donorliganden sind beispielsweise Tetrahydrofuran, Diethylether, Dimethylether u.ä., vorzugsweise Tetrahydrofuran (THF).

Die Synthese wird unter Schutzgas und in wasserfreien Lösemitteln durchgeführt. Im Falle a) wird zu einer Suspension der Verbindung der Formel III in einem Lösemittel wie Toluol, n-Hexan, Dichlormethan, Ether, THF, n-Pentan, Benzol, vorzugsweise in Dichlormethan oder Toluol, das getrocknete Salz der Formel II zugegeben. Die Reaktionstemperatur beträgt -78 °C bis 30 °C, vorzugsweise -40 °C bis 10 °C. Die Reaktionsdauer beträgt 0,25 bis 24 h, vorzugsweise 1 bis 4 h.

Im Falle b) wird zu einer Lösung oder einer Suspension einer Verbindung der Formel IIIa in einem Lösemittel wie Toluol, Xylol, Ether oder THF, vorzugsweise THF, eine Lösung des Salzes der Formel II in einem der obengenannten Lösemittel zugegeben. Es kann aber auch so vorgegangen werden, daß beide Komponenten simultan zu einem Lösemittel getropft werden. Dies wird bevorzugt durchgeführt. Die Reaktionstemperatur beträgt -40 °C bis 100 °C, vorzugsweise 0 °C bis 50 °C, insbesondere 10 °C bis 35 °C. Die Reaktionsdauer beträgt 0,25 h bis 48 h, vorzugsweise 1 h bis 24 h, insbesondere 2 h bis 9 h.

Die so erhaltenen Halogenderivate können nach bekannten Standardverfahren in die Alkyl-, Aryl- oder Alkenylkomplexe umgewandelt werden.

Die Synthese der Verbindungen der Formeln II erfolgt durch Deprotonierung. Diese Reaktion ist bekannt; vgl. J. Am. Chem. Soc., 112 (1990) 2030-2031, ibid. 110 (1988) 6255-6256, ibid. 109 (1987), 6544-6545, J. Organomet. Chem., 322 (1987) 65-70, New. J. Chem. 14 (1990) 499-503 und die Ausführungsbeispiele.

Auch die Synthese der protonierten Formen von den Verbindungen dieser Formeln ist beschrieben, mit der Abweichung, daß sie in $\alpha$- und $\beta$-Position nicht entsprechend substituiert sind (Bull. Soc. Chim., 1967, 2954). Die zu ihrer Synthese benötigten Brückenbausteine sind in der Regel bei kommerziellen Anbieten erhältlich, die benötigten Indenyl-Verbindungen dagegen nicht. Einige Synthesevorschriften beinhaltende Literaturzitate seien angegeben, die Vorgehensweise für nicht angeführte Indenderivate ist analog: J. Org. Chem., 49 (1984) 4226-4237, J. Chem. Soc., Perkin II, 1981, 403-408, J. Am. Chem. Soc., 106 (1984) 6702, J. Am. Chem. Soc., 65 (1943) 567, J. Med. Chem., 30 (1987) 1303-1308, Chem. Ber. 85 (1952) 78-85 und die Ausführungsbeispiele.

Die Metallocene I können somit prinzipiell nach folgendem Reaktionsschema hergestellt werden:

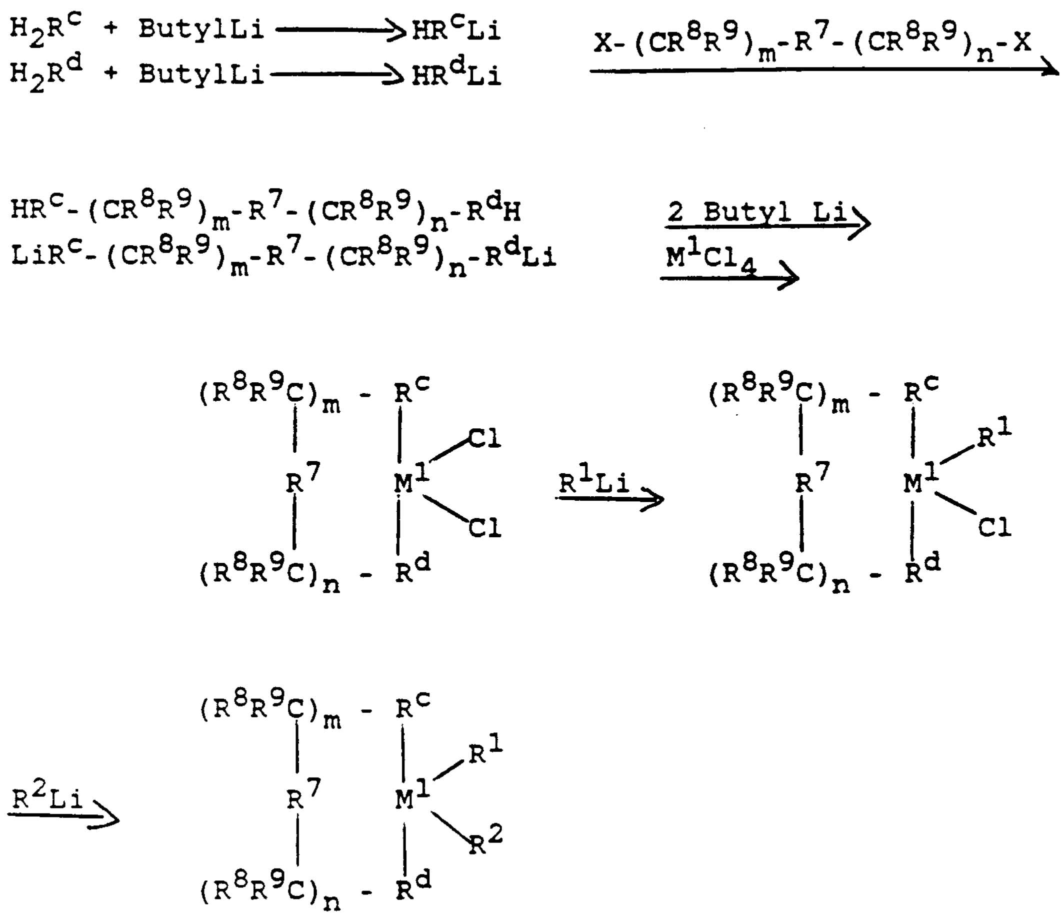


X = Cl, Br, I, O-Tosyl; $H_2R^c$ =

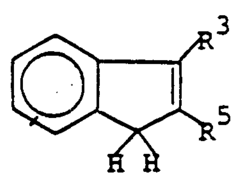

$H_2R^d$ =

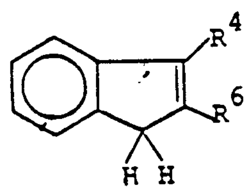

Erfindungsgemäß wird als Cokatalysator bei der Olefinpolymerisation ein Aluminoxan der Formel (IV)

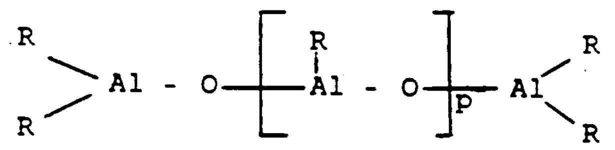 (IV)

für den linearen Typ und/oder der Formel (V)

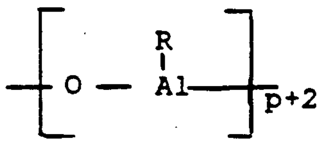 (V)

für den cyclischen Typ verwendet, wobei in den Formeln (IV) und (V) die Reste R gleich oder verschieden sein können und eine $C_1$-$C_6$-Alkylgruppe, eine $C_6$-$C_{18}$-Arylgruppe oder Wasserstoff bedeuten, und p eine ganze Zahl von 2 bis 50, bevorzugt 10 bis 35 bedeutet.

Bevorzugt sind die Reste R gleich und bedeuten Methyl, Isobutyl, Phenyl oder Benzyl, besonders bevorzugt Methyl.

Sind die Reste R unterschiedlich, so sind sie bevorzugt Methyl und Wasserstoff oder alternativ Methyl und Isobutyl, wobei Wasserstoff bzw. Isobutyl bevorzugt zu 0,01 - 40 % (Zahl der Reste R) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen R werden entsprechend der gewünschten Zusammensetzung zwei verschiedene Aluminiumtrialkyle ($AlR_3$ + $AlR'_3$) mit Wasser umgesetzt (vgl. S. Pasynkiewicz, Polyhedron 9 (1990) 429 und EP-A 302 424).

Die genaue Struktur der Aluminoxane IV und V ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, das Metallocen I vor dem Einsatz in der Polymerisationsreaktion mit einem Aluminoxan der Formel (IV) und/oder (V) vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78 °C bis 100 °C, vorzugsweise 0 bis 70 °C.

Das Metallocen kann auch vorpolymerisiert oder auf einen Träger aufgebracht werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des Verfahrens besteht darin, daß man an Stelle oder neben eines Aluminoxans eine salzartige Verbindung der Formel $R_xNH_{4-x}BR'_4$ oder der Formel $R_3PHBR'_4$ als Cokatalysator verwendet. Dabei sind x = 1,2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt eines Metallocens mit einer der genannten Verbindungen (vgl. EP-A 277 004).

Die Polymerisation oder Copolymerisation wird in bekannter Weise in Lösung, in Suspension oder in der Gasphase, kontinuierlich oder diskontinuierlich, ein- oder mehrstufig bei einer Temperatur von 0 bis 150 °C, vorzugsweise 30 bis 80 °C, durchgeführt. Polymerisiert oder copolymerisiert werden Olefine der Formel $R^a$-CH=CH-$R^b$. In dieser Formel sind $R^a$ und $R^b$ gleich oder verschieden und bedeuten ein Wasserstoffatom oder einen Alkylrest mit 1 bis 14 C-Atomen. $R^a$ und $R^b$ können jedoch auch mit den sie verbindenden C-Atomen einen Ring bilden. Beispiele für solche Olefine sind Ethylen, Propylen, 1-Buten, 1-Hexen, 4-Methyl-1-penten, 1-Octen, Norbornen oder Norbornadien. Insbesondere wird Propylen und Ethylen polymerisiert.

Als Molmassenregler wird, falls erforderlich, Wassertoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Dabei wird das Metallocen in einer Konzentration, bezogen auf das Übergangsmetall, von $10^{-3}$ bis $10^{-8}$, vorzugweise $10^{-4}$ bis $10^{-7}$ mol Übergangsmetall pro $dm^3$ Lösemittel bzw. pro $dm^3$ Reaktorvolumen angewendet. Das Aluminoxan wird in einer Konzentration von $10^{-5}$ bis $10^{-1}$ mol, vorzugsweise $10^{-4}$ bis $10^{-2}$ mol pro $dm^3$ Lösemittel bzw. pro $dm^3$ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan, genannt.

Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Das Verfahren zeichnet sich dadurch aus, daß die erfindungsgemäßen Metallocene im technisch interessanten Temperaturbereich zwischen 30 und 80 °C Polymere mit hoher Molmasse, hoher Stereospezifität und guter Kornmorphologie erzeugen.

Insbesondere die erfingungsgemäßen Zirkonocene stoßen in einem Molmassenbereich vor, der beim bisherigen Stand der Technik den Hafnocenen vorbehalten war. Diese hatten jedoch den Nachteil nur geringer Polymerisationsaktivität und sehr hoher Katalysatorkosten und die damit hergestellten Polymeren wiesen eine schlechte Pulvermorphologie auf.

Die nachfolgenden Beispiele sollen die Erfindung näher erläutern.

Synthese der Ausgangssubstanzen

I) Synthese von 2-Me-Inden

110,45 g (0,836 mol) 2-Indanon wurden in 500 $cm^3$ Diethylether gelöst und 290 $cm^3$ 3 n (0,87 mol) etherische Methylgrignardlösung so zugetropft, daß leicht refluxierte. Nach 2 h Kochen unter leichtem Rückfluß wurde auf eine Eis/Salzsäure-Mischung gegeben und mit Ammoniumchlorid ein pH von 2-3 eingestellt. Die organische Phase wurde abgetrennt und mit $NaHCO_3$ und Kochsalzlösung gewaschen und getrocknet. Es wurden 98 g Rohprodukt (2-Hydroxy-2-methyl-indan) erhalten, welches nicht weiter gereinigt wurde.

In 500 $cm^3$ Toluol wurde dieses Produkt gelöst, mit 3 g p-Toluolsulfonsäure am Wasserabscheider bis zur Beendigung der Wasserabspaltung erhitzt, eingeengt, in Dichlormethan aufgenommen und über Silicagel filtriert und im Vakuum destilliert (80 °C/10 mbar).
Ausbeute: 26,49 g (0,22 mol-26 %).

Die Synthese dieser Verbindung ist auch beschrieben in: C.F. Koelsch, P.R. Johnson, J. Am. Chem. Soc., 65 (1943) 567-573

II) Synthese von $(2\text{-Me-Inden})_2SiMe_2$

13 g (100 mmol) 2-Me-Inden wurde in 400 $cm^3$ Diethylether gelöst und 62,5 $cm^3$ 1,6 n (100 mmol) n-Butyllithium-n-Hexan-Lösung innerhalb 1 h unter Eiskühlung zugetropft und dann 1 h bei ~35 °C nachgerührt.

6,1 $cm^3$ (50 mmol) Dimethyldichlorsilan wurden in 50 $cm^3$ $Et_2O$ vorgelegt und bei 0 °C die Lithiosalzlösung innerhalb von 5 h zugetropft, über Nacht bei Raumtemperatur gerührt und über das Wochenende

stehen gelassen.

Vom abgesetzten Feststoff wurde abfiltriert und zur Trockne eingedampft. Nach Extraktion mit kleinen Portionen n-Hexan wurde filtriert und eingeengt. Es fielen 5,7 g (18,00 mmol) eines weißen Kristallisats an. Die Mutterlauge wurde eingeengt und dann säulenchromatographisch (n-Hexan/$H_2CCl_2$ 9:1 vol.) gereinigt, wobei nochmals 2,5 g (7,9 mmol-52 %) Produkt (als Isomerengemisch) anfielen.
$r_F$ ($SiO_2$; n-Hexan/$H_2CCl_2$ 9:1 vol.) = 0,37
Das 1-H-NMR-Spektrum zeigt die für ein Isomerengemisch zu erwartenden Signale in Verschiebung und Integrationsverhältnis.

III) Synthese von (2-Me-Ind)$_2$$CH_2CH_2$

3 g (23 mmol) 2-Me-Inden wurden in 50 $cm^3$ THF gelöst und 14,4 $cm^3$ 1,6 n (23,04 mmol) n-Butyllithium-n-Hexan-Lösung zugetropft und dann 1 h bei 65 °C gerührt. Danach wurde 1 ml (11,5 mmol) 1,2-Dibromethan bei -78 °C zugegeben, auf Raumtemperatur erwärmen lassen und 5 h gerührt. Nach Eindampfen wurde säulenchromatographisch gereinigt ($SiO_2$; n-Hexan/$H_2CCl_2$ 9:1 vol.).

Die produkthaltigen Fraktionen wurden vereinigt, eingedampft und in trockenem Ether aufgenommen, über $MgSO_4$ getrocknet, filtriert und das Lösemittel abgezogen.
Ausbeute: 1,6 g (5,59 mmol - 49 %) an Isomerengemisch
$r_F$ ($SiO_2$; n-Hexan/$H_2CCl_2$ 9:1 vol.) = 0,46
Das 1-H-NMR-Spektrum entspricht der Erwartung für ein Isomerengemisch in Signalverschiebung und Integration.

Synthese der Metallocene I

IV) Synthese von rac-Dimethylsilyl(2-Me-1-indenyl)$_2$-zirkondichlorid

1,68 g(5,31 mmol) des Chelatliganden Dimethylsilyl(2-methylinden)$_2$ wurden in 50 $cm^3$ THF gegeben und 6,63 $cm^3$ einer 1,6 n (10,61 mmol) n-BuLi-n-Hexan-Lösung zugetropft. Die Zugabe erfolgte bei Umgebungstemperatur innerhalb 0,5 h. Nach 2 stündigem Rühren bei ca. 35 °C wurde das Lösemittel im Vakuum abgezogen und der Rückstand mit n-Pentan verrührt, abfiltriert und getrocknet.

Das so erhaltene Dilithiosalz wurde bei -78 °C zu einer Suspension von 1,24 g (5,32 mmol) $ZrCl_4$ in 50 $cm^3$ $CH_2Cl_2$ gegeben und die Mischung 3 h bei dieser Temperatur gerührt. Nach Erwärmung auf Raumtemperatur über Nacht, wurde eingedampft. Das 1-H-NMR-Spektrum zeigte, neben dem Vorliegen von etwas $ZrCl_4(thf)_2$, ein rac-meso-Gemisch. Nach Verrühren mit n-Pentan und Trocknen wurde der feste, gelbe Rückstand in THF suspendiert, abfiltriert und NMR-spektroskopisch untersucht. Diese drei Arbeitsschritte wurden mehrmals wiederholt; schließlich wurden 0,35 g (0,73 mmol-14 %) Produkt erhalten, in dem die rac-Form, nach 1-H-NMR, auf mehr als 17:1 angereichert war.

Die Verbindung zeigte eine korrekte Elementaranalyse und die folgenden NMR-Signale ($CDCl_3$, 100 MHz) : $\delta$ = 1,25 (s, 6H, Si-Me); 2,18 (s, 6H, 2-Me), 6,8 (s, 2H, 3-H-Ind); 6,92-7,75 (m, 8H, 4-7-H-Ind).

V) rac-Dimethylsilyl(2-Me-1-indenyl)$_2$-zirkondimethyl

0,24 g (0,58 mmol) rac-Dimethylsilyl(2-Me-1-indenyl)$_2$-zirkondichlorid in 40 $cm^3$ $Et_2O$ wurden bei -50 °C tropfenweise mit 1,3 $cm^3$ einer 1,6 n (2,08 mmol) etherischen MeLi-Lösung versetzt und 2 h bei -10 °C gerührt. Nach Austausch des Lösemittels gegen n-Pentan wurde noch 1,5 h bei Raumtemperatur gerührt und der filtrierte Rückstand im Vakuum sublimiert. Es wurden 0,19 g (0,44 mmol-81 %) Sublimat mit einer korrekten Elementaranalyse erhalten.

VI) rac-Ethylen(2-Me-1-indenyl)$_2$-zirkondichlorid

Zu 5,07 g (17,7 mmol) Ligand Ethylen(2-methylinden)$_2$ in 200 $cm^3$ THF wurde bei Raumtemperatur 14,2 $cm^3$ 2,5 n (35,4 mmol) n-BuLi-n-Hexan-Lösung innerhalb 1 h zugetropft und dann 3 h bei ca. 50 °C gerührt. Dabei geht ein zwischenzeitlich gebildeter Niederschlag wieder in Lösung. Über Nacht wurde stehengelassen.

6,68 g (17,7 mmol) $ZrCl_4(thf)_2$ in 250 $cm^3$ THF wurden simultan mit obiger Dilithiosalzlösung zu ca. 50 $cm^3$ THF bei 50 °C zugetropft und dann 20 h bei dieser Temperatur gerührt. Der Toluolextrakt des Eindampfrückstands wurde eingedampft. Nach Extraktion des Rückstands mit wenig THF wurde aus Toluol umkristallisiert. Dabei wurden 0,44 g (0,99 mmol-5,6 %) Produkt erhalten, wobei die rac-Form besser als

15:1 angereichert war.

Die Verbindung zeigte eine korrekte Elementaranalyse und die folgenden NMR-Signale ($CDCl_3$, 100 MHz) : $\delta$ = 2,08 (2s, 6H, 2-Me); 3,45-4,18 (m, 4H, $-CH_2CH_2-$), 6,65 (2H, 3-H-Ind); 7,05-7,85 (m, 8H, 4-7-H-Ind).

VII) $Me_2Zr[(2\text{-Me-Ind})_2CH_2CH_2]$

1,43 g (3,20 mmol) $Cl_2Zr[(2\text{-Me-Ind})_2CH_2CH_2]$ wurden in 50 $cm^3$ $Et_2O$ gelöst und bei -40 °C tropfenweise mit 6 $cm^3$ 1,6 n (9,6 mmol) etherischer Methyllithiumlösung versetzt. Nach 2 h Rühren bei -10 °C wurde der Eindampfrückstand in n-Hexan aufgenommen, 1 h bei Raumtemperatur gerührt und dann nach Filtration eingedampft und sublimiert.

Ausbeute: 1,20 g (2,96 mmol-92 %); korrekte Elementaranalyse

VIII) $Cl_2Zr[(2\text{-Me-Ind})_2SiPh_2]$

Zu 4,41 g (10 mmol) $(2\text{-Me-Ind})_2SiPh_2$ in 40 $cm^3$ THF wurden 12,5 $cm^3$ 1,6 n (20 mmol) n-Butyllithium-n-Hexanlösung bei Raumtemperatur innerhalb von 0,5 h zugetropft und dann 1 h bei 55 °C gerührt. Nach Abziehen der Lösemittel wurde in n-Hexan verrührt, abfiltriert und im Vakuum getrocknet.

2,33 g (10 mmol) $ZrCl_4$ wurden in 50 $cm^3$ $H_2CCl_2$ suspendiert und bei -78 °C das Dilithiosalz aus obiger Reaktion zugegeben und über Nacht auf Raumtemperatur erwärmt. Nach Filtration wurde eingedampft, mit mehreren kleinen Portionen THF gewaschen und dann im Vakuum getrocknet. Es wurden 2,11 g (3,51 mmol-35 %) Produkt erhalten. Die Elementaranalyse entsprach den zu fordernden C,H,Cl-Werten.

IX) $Cl_2Zr[(2\text{-Me-Ind})_2SiMePh]$

Zu 5,68 g (15 mmol) $(2\text{-Me-Ind})_2SiMePh$ in 50 $cm^3$ THF wurden 12 $cm^3$ 2,5 n (30 mmol) n-Butyllithium-n-Hexan-Lösung bei 10 °C innerhalb von 1 h zugetropft und 1 h dann bei 50 °C gerührt und eingedampft. Nach suspendieren in n-Hexan wurde abfiltriert und im Vakuum getrocknet.

3,5 g (15,02 mmol) $ZrCl_4$ wurden in 100 $cm^3$ $H_2CCl_2$ suspendiert und das Dilithiosalz bei -78 °C zugegeben. Dann wurde 6 h bei -25 °C und 2 h bei 0 °C gerührt. Nach Filtration wurde der Eindampfrückstand mit wenig THF mehrmals extrahiert und dann im Vakuum getrocknet.

Ausbeute: 1,47 g (2,73 mmol-18 %); mit korrekter Elementaranalyse

X) $Cl_2Zr[(2\text{-Et-Ind})_2CH_2CH_2]$

Zu 3,77 g (11,99 mmol) $(2\text{-Et-Ind})_2CH_2CH_2$ in 150 $cm^3$ THF wurden 9,6 $cm^3$ 2,5 n (24 mmol) n-Butyllithium-n-Hexanlösung bei Raumtemperatur innerhalb 10 min. zugetropft. Nach 2 stündigem Rühren bei 50 °C wurde die erhaltene, auf Umgebungstemperatur abgekühlte Dilithiosalzlösung simultan mit einer gleichvolumigen Lösung von 4,53 g (12 mmol) $ZrCl_4$ zu 50 $cm^3$ THF bei 35 °C innerhalb von 6 h zugetropft und über Nacht weitergerührt. Der eingedampfte Ansatz wurde mit mehreren Portionen einer Toluol/n-Hexan-Mischung (vol. 3:1) extrahiert, filtriert und eingedampft. Nach Waschen mit kleinen Portionen THF wurde im Vakuum getrocknet.

Ausbeute: 2,37 g (4,99 mmol-42 %). Die Elementaranalyse war korrekt.

XI) $Cl_2Zr[(2\text{-Et-Ind})_2SiMe_2]$

6,2 g (18 mmol) $(2\text{-Et-Ind})_2SiMe_2$ in 150 $cm^3$ THF werden mit 22,5 $cm^3$ 1,6 n (36 mmol) etherischer Methyllithiumlösung tropfenweise bei Raumtemperatur innerhalb von 1 h versetzt und bis Beendigung der Gasentwicklung bei 45 °C gerührt. Das Lösemittel wurde abgezogen und dann in n-Pentan digeriert, abfiltriert und im Vakuum getrocknet.

Zu 4,2 g (18,02 mmol) $ZrCl_4$ suspendiert in 100 $cm^3$ $H_2CCl_2$ wurde das Dilithiosalz bei -45 °C zugegeben und auf -20 °C erwärmen gelassen. Nach 3 h Rühren bei dieser Temperatur wurde auf Raumtemperatur erwärmt, filtriert und eingedampft. Dann wurde mit mehreren Portionen Toluol extrahiert, filtriert und eingedampft. Nach Verrühren mit n-Hexan wurde abfiltriert und im Vakuum getrocknet.

Ausbeute: 1,04 g (2,06 mmol-11 %). Die Substanz zeigte eine korrekte Elementaranalyse.

XII) $Cl_2Zr[(2\text{-}Me\text{-}Ind)_2CHMeCH_2]$

Zu 2,12 g (7.06 mmol) $(2\text{-}Me\text{-}Ind)_2CHMeCH_2$ in 40 $cm^3$ THF wurden 8,85 $cm^3$ 1,6 n (14,16 mmol) n-Buthyllithium-n-Hexanlösung bei Raumtemperatur innerhalb von 0,5 h zugetropft und dann 1,5 h bei 55 °C gerührt. Diese Lösung wurde dann bei 0 °C zu 2,66 g (7,05 mmol) $ZrCl_4(thf)_2$ in50 $cm^3$ THF über einen Zeitraum von 2 h zugegeben. Nach Rühren von 2 h bei Raumtemperatur wurde eingedampft und mit mehreren kleinen Portionen Toluol/n-Hexan 1:1 (vol.) extrahiert, eingedampft und in der Wärme mit n-Hexan extrahiert, eingeengt und abfiltriert.
Ausbeute: 0,44 g (0,96 mmol-14 %); korrekte Elementaranalyse

XIII) $Cl_2Zr[(2\text{-}Me\text{-}Ind)_2CMe_2]$

1,97 g (6,56 mmol) $(2\text{-}Me\text{-}Ind)_2CMe_2$ in 60 $cm^3$ $Et_2O$ gelöst werden mit 8,2 $cm^3$ (13,12 mmol) 1,6 n etherischer Methyllithiumlösung tropfenweise bei 0 °C versetzt und dann 2 h refluxiert. Der Eindampfrückstand wurde mit n-Hexan verrührt, abgetrennt und im Vakuum getrocknet.

Das erhaltene Dilithiosalz wurde zu einer Suspension von 1,53 g (6,57 mmol) $ZrCl_4$ in 60 $cm^3$ $H_2CCl_2$ bei -50 °C gegeben und 3 h bei -35 °C gerührt. Nach Erwärmung auf Raumtemperatur filtriert und mit wenigen Portionen Toluol/n-Hexan extrahiert, dann eingedampft, mit n-Pentan verrührt und das Lösemittel im Vakuum abgezogen.
Ausbeute: 0,81 g (1,76 mmol-27 %); korrekte Elementaranalyse

XIV) $Me_2Zr[(2\text{-}Me\text{-}Ind)_2SiMePh]$

2,29 g (4,25 mmol) $Cl_2Zr[(2\text{-}Me\text{-}Ind)_2SiMePh]$ wurden in 50 $cm^3$ $Et_2O$ gelöst und bei -50 °C 6,5 $cm^3$ 1,6 n (10,4 mmol) etherische Methyllithiumlösung zugetropft, bei -25 °C 2,5 h gerührt. Nach Austausch des Lösemittels gegen n-Hexan wurde noch 1 h bei Raumtemperatur gerührt, abfiltriert, etwas eingeengt, erneut filtriert und das Lösemittel abgedampft.
Ausbeute: 1,58 g (3,17 mmol-75 %); korrekte Elementaranalyse

Abkürzungen:

Me = Methyl, Et = Ethyl, Bu = Butyl, Ph = Phenyl, Ind = Indenyl, THF = Tetrahydrofuran, PP = Polypropylen, PE = Polyethylen

Metallocene I als Katalysatoren für die Olefinpolymerisation

Es bedeuten:
VZ = Viskositätszahl in $cm^3/g$

$M_w$ = Molmassengewichtsmittel in g/mol
$M_w/M_n$ = Molmassendispersität
} ermittelt durch Gelpermeationschromatographie

II = Isotaktischer Index (II = mm + 1/2 mr), ermittelt durch $^{13}C$-NMR-Spektroskopie
SD = Polymerschüttdichte in $g/dm^3$
MFI (230/5) = Schmelzindex, gemessen nach DIN 53735 in g/10 min

Beispiel 1

Ein trockener 24 $dm^3$-Reaktor wurde mit Stickstoff gespült und mit 12 $dm^3$ flüssigem Propylen befüllt.

Dann wurden 35 $cm^3$ toluolische Methylaluminoxanlösung (entsprechend 52 mmol Al, mittlerer Oligomerisierungsgrad n = 17) zugegeben und der Ansatz bei 30 °C 15 Minuten gerührt.

Parallel dazu wurden 6,9 mg (0,015 mmol) rac-Ethylen(2-Me-1-indenyl)$_2$zirkondichlorid in 13,5 $cm^3$ toluolischer Methylaluminoxanlösung (20 mmol Al) gelöst und durch 15 minütiges Stehenlassen voraktiviert.

Die Lösung wurde dann in den Reaktor gegeben, durch Wärmezufuhr auf 70 °C aufgeheizt (10 °C/min) und das Polymerisationssystem 1 h durch Kühlung bei 70 °C gehalten. Gestoppt wurde die Polymerisation durch Abgasen des überschüssigen Monomeren. Es wurden 1,56 kg Polypropylen erhalten.
Die Aktivität des Metallocens betrug somit 226 kgPP/g Metallocen x h.
VZ = 67 $cm^3$/g; $M_w$ = 58 900 g/mol; $M_w/M_n$ = 2,0; II = 95,9 %; SD = 350 g/$dm^3$

Beispiel 2

Beispiel 1 wurde wiederholt, es wurden jedoch 10,1 mg (0,023 mmol) des Metallocens verwendet und es wurde bei 50 °C polymerisiert.
Es wurden 0,51 kg Polymerpulver erhalten, entsprechend einer Metallocenaktivität von 50,5 kgPP/g Metallocen x h.
VZ = 100 $cm^3$/g; $M_w$ = 108 500 g/mol; $M_w/M_n$ = 2,2; II = 96,4 %; MFI (230/5) = 210 g/10 min

Beispiel 3

Beispiel 1 wurde wiederholt, es wurden jedoch 10,5 mg (0,023 mmol) des Metallocens eingesetzt und es wurde bei 30 °C 10 h polymerisiert.
Es wurden 1,05 kg Polymerpulver erhalten, entsprechend einer Metallocenaktivität von 10,0 kgPP/g Metallocen x h.
VZ = 124 $cm^3$/g; $M_w$ = 157 000 g/mol; $M_w/M_n$ = 2,2; II = 96,3 %; MFI (230/5) = 104 g/10 min

Vergleichsbeispiele A - C

In zu den Beispielen 1 bis 3 analoger Weise wurde unter Verwendung des Metallocens rac-Ethylenbisindenylzirkondichlorid polymerisiert. Die Viskositätszahlen und Molmassen der dabei erhaltenen Polymerprodukte betrugen:

| Vergl.-beisp. | Polym.temp. [°C] | VZ [$cm^3$/g] | $M_w$ [g/mol] |
|---|---|---|---|
| A | 70 | 30 | 19 900 |
| B | 50 | 46 | 38 500 |
| C | 30 | 60 | 48 700 |

Diese Vergleichsbeispiele zeigen den molmassenerhöhenden Einfluß des Substituenten in 2-Position am Indenylliganden.

Beispiel 4

Es wurde verfahren wie in Beispiel 1, verwendet wurden jedoch 4,0 mg (0,008 mmol) rac-Dimethylsilyl-(2-methyl-1-indenyl)$_2$zirkondichlorid.
Die Metallocenaktivität betrug 293 kgPP/g Metallocen x h.
VZ = 171 $cm^3$/g; $M_w$ = 197 000 g/mol; $M_w/M_n$ = 2,5; II = 96,0 %; MFI (230/5) = 43,2 g/10 min; SD = 460 g/$dm^3$, Schmp. = 145 °C

Beispiel 5

Es wurde verfahren wie in Beispiel 1, verwendet wurden jedoch 6,0 mg (0,013 mmol) rac-Dimethylsilyl-(2-methyl-1-indenyl)$_2$zirkondichlorid.
Die Polymerisationstemperatur betrug 60 °C, die Polymerisationszeit 1 h.
Die Metallocenaktivität betrug 178 kgPP/g Metallocen x h.
VZ = 217 $cm^3$/g; $M_w$ = 297 000 g/mol; $M_w/M_n$ = 2,3; II = 96,4 %; MFI (230/5) = 12,9 g/10 min, Schmp. = 148 °C

Beispiel 6

Es wurde verfahren wie in Beispiel 1, verwendet wurden jedoch 2,4 mg (0,0052 mmol) rac-Dimethylsilyl(2-methyl-1-indenyl)$_2$zirkondichlorid. Die Polymerisationstemperatur betrug 50 °C, die Polymerisationszeit 3 h.
Die Metallocenaktivität betrug 89 kgPP/g Metallocen x h.
VZ = 259 $cm^3$/g; $M_w$ = 342 500 g/mol; $M_w/M_n$ = 2,1; II = 96,8 %; MFI (230/5) = 8,1 g/10 min, Schmp. = 150 °C

Beispiel 7

Es wurde verfahren wie in Beispiel 1, verwendet wurden jedoch 9,9 mg (0,021 mmol) rac-Dimethylsilyl-(2-methyl-1-indenyl)$_2$zirkondichlorid.
Die Polymerisationstemperatur betrug 30 °C, die Polymerisationszeit 2 h.
Die Metallocenaktivität betrug 26,5 kgPP/g Metallocen x h.
VZ = 340 $cm^3$/g; $M_w$ = 457 000 g/mol; $M_w/M_n$ = 2,4; II = 96,0 %; MFI (230/5) = 2,5 g/10 min

Beispiel 8

Ein trockener 24 $dm^3$-Reaktor wurde mit Stickstoff gespült und mit 6 $dm^3$ eines entaromatisierten Benzinschnittes mit dem Siedebereich 100-120 °C sowie 6 $dm^3$ flüssigem Propylen befüllt. Dann wurden 35 $cm^3$ toluolische Methylaluminoxanlösung (entsprechend 52 mmol Al, mittlerer Oligomerisierungsgrad n = 17) zugegeben und der Ansatz bei 30 °C 30 Minuten gerührt.

Parallel dazu wurden 14,7 mg (0,031 mmol) rac-Dimethylsilyl(2-methyl-1-indenyl)$_2$zirkondichlorid in 13,5 $cm^3$ toluolischer Methylaluminoxanlösung (20 mmol Al) gelöst und durch 30 minütiges stehenlassen voraktiviert.

Die Lösung wurde dann in den Reaktor gegeben und das Polymerisationssystem 1 h bei 50 °C durch Kühlung gehalten. Die Polymerisation wurde durch Zugabe von 50 $cm^3$ Isopropanol gestoppt.
Die Metallocenaktivität betrug 159,2 kgPP/g Metallocen x h.
VZ = 188 $cm^3$/g; $M_w$ = 240 000 g/mol; $M_w/M_n$ = 2,1; II = 96,0 %; MFI (230/5) = 28,6 g/10 min

Beispiel 9

Beispiel 8 wurde wiederholt, es wurden jedoch 15,2 mg (0,032 mmol) des Metallocens verwendet, die Polymerisationszeit war 2 h und die Polymerisationstemperatur war 30 °C.
Die Metallocenaktivität betrug 24,1 kgPP/g Metallocen x h.
VZ = 309 $cm^3$/g; $M_w$ = 409 000 g/mol; $M_w/M_n$ = 2,3; II = 97,0 %; MFI (230/5) = 3,5 g/10 min

Vergleichsbeispiele D - F

In zu den Beispielen 4, 6 und 7 analoger Weise wurde unter Verwendung des Metallocens Dimethylsilylbisindenylzirkondichlorid polymerisiert. Die Viskositätszahlen und Molmassen der dabei erhaltenen Polymerprodukte betrugen:

| Vergl.-beisp. | Polym.temp. [°C] | VZ [$cm^3$/g] | $M_w$ [g/mol] |
|---|---|---|---|
| D | 70 | 47 | 37 500 |
| E | 50 | 60 | 56 000 |
| F | 30 | 77 | 76 900 |

Diese Beispiele zeigen den molmassenerhöhenden Einfluß des Substituenten in 2-Position am Indenylliganden.

Beispiel 10

Beispiel 1 wurde wiederholt, es wurden jedoch 4,1 mg (0,008 mmol) des Metallocens rac-Phenyl-(methyl)silyl-(2-methyl-1-indenyl)$_2$$ZrCl_2$ verwendet.
Es wurden 1,10 kg Polypropylen erhalten, entsprechend einer Aktivität des Metallocens von 269 kg PP/g Metallocen x h
VZ = 202 $cm^3$/g, $M_w$ = 230000 g/mol, $M_w/M_n$ = 2,3, II = 97 %, MFI (230/5) = 36 g/10 min, Schmp. = 147 °C.

Beispiel 11

Beispiel 1 wurde wiederholt, es wurden jedoch 5,2 mg (0,009 mmol) des Metallocens rac-Diphenylsilyl-(2-methyl-1-indenyl)$_2$ZrCl$_2$ verwendet.
Es wurden 1,14 kg Polypropylen erhalten. Die Metallocenaktivität betrug somit 219 kg PP/g Metallocen x h.
VZ = 298 cm$^3$/g, $M_w$ = 367000 g/mol, $M_w/M_n$ = 2,2, MFI (230/5) = 7,1 g/10 min.

Beispiel 12

Beispiel 1 wurde wiederholt, es wurden jedoch 17,4 mg (0,038 mmol) des Metallocens rac-Methylethylen(2-methyl-1-indenyl)$_2$ZrCl$_2$ verwendet.
Es wurden 2,89 kg Polypropylen erhalten. Die Metallocenaktivität betrug somit 165,9 kg PP/g Metallocen x h.
VZ = 138 cm$^3$/g, $M_w$ = 129000 g/mol, $M_w/M_n$ = 2,2, Schmp. = 150 °C.

Beispiel 13

Beispiel 1 wurde wiederholt, es wurden jedoch 9,6 mg (0,02 mmol) des Metallocens rac-Dimethylsilyl(2-ethyl-1-indenyl)$_2$zirkondichlorid verwendet.
Es wurden 1,68 kg Polypropylen, entsprechend einer Metallocenaktivität von 175,0 kg PP/g Metallocen x h, erhalten.
VZ = 143 cm$^3$/g, $M_w$ = 132000 g/mol, $M_w/M_n$ = 2,3, Schmp. = 140 °C.

**Patentansprüche**

**Patentansprüche für folgende Vertragsstaaten : BE, DE, FR, GB, IT, NL**

**1.** Verbindung der Formel I

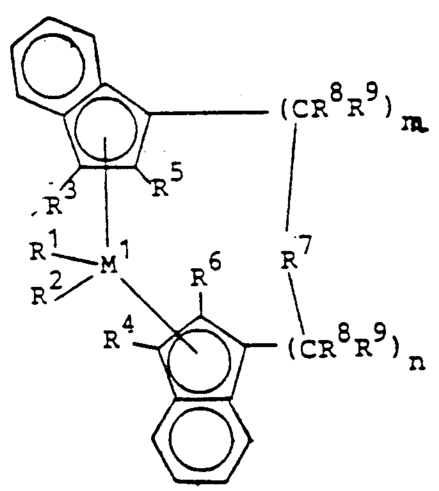

(I)

worin

| | |
|---|---|
| $M^1$ | ein Metall der Gruppe IVb, Vb oder VIb des Periodensystems ist, |
| $R^1$ und $R^2$ | gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten, |
| $R^3$ und $R^4$ | gleich oder verschieden sind und ein Wasserstoffatom, ein Halogenatom, eine $C_1$-$C_{10}$-Alkylgruppe, die halogeniert sein kann, eine $C_6$-$C_{10}$-Arylgruppe, einen $-NR_2^{10}$, $-SR^{10}$, $-OSiR_3^{10}$, $SiR_3^{10}$ oder $-PR_2^{10}$-Rest bedeuten, worin $R^{10}$ ein Halogenatom, eine $C_1$-$C_{10}$-Alkylgruppe oder eine $C_6$-$C_{10}$-Arylgruppe ist, |
| $R^5$ und $R^6$ | gleich oder verschieden sind und die für $R^3$ und $R^4$ genannte Bedeutung haben, |

mit der Maßgabe, daß $R^5$ und $R^6$ nicht Wasserstoff sind,

$R^7$

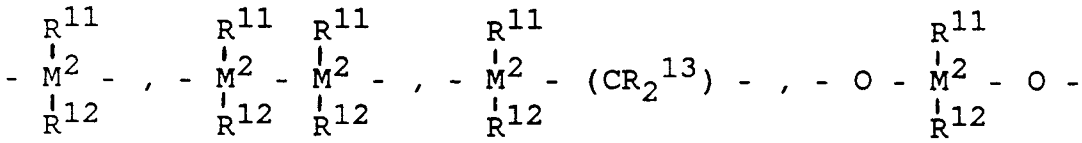

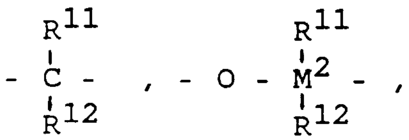

$=BR^{11}$, $=AlR^{11}$, -Ge-, -Sn-, -O-, -S-, =SO, $=SO_2$, $=NR^{11}$, =CO, $=PR^{11}$ oder $=P(O)R^{11}$ ist,

wobei

$R^{11}$, $R^{12}$ und $R^{13}$ gleich oder verschieden sind und ein Wasserstoffatom, ein Halogenatom, eine $C_1$-$C_{10}$-Alkylgruppe, $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden,

$M^2$ Silizium, Germanium oder Zinn ist,

$R^8$ und $R^9$ gleich oder verschieden sind und die für $R^{11}$ genannte Bedeutung haben und m und n gleich oder verschieden sind und null, 1 oder 2 sind, wobei m plus n null, 1 oder 2 ist.

**2.** Verbindung der Formel I gemäß Anspruch 1, dadurch gekennzeichnet, daß in Formel I $M^1$ Zr oder Hf, $R^1$ und $R^2$ gleich oder verschieden sind und Methyl oder Chlor, $R^3$ und $R^4$ Wasserstoff, $R^5$ und $R^6$ gleich oder verschieden sind und Methyl, Ethyl oder Trifluormethyl, $R^7$ einen Rest

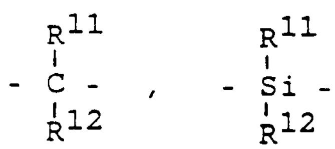

und n plus m null oder 1 bedeuten.

**3.** Verbindung der Formel I gemäß Anspruch 1 oder 2, dadurch gekennzeichnet, daß es sich um rac-Dimethylsilyl(2-methyl-1-indenyl)$_2$zirkondichlorid, rac-Ethylen(2-methyl-1-indenyl)$_2$-zirkondichlorid, rac-Dimethylsilyl(2-methyl-1-indenyl)$_2$zirkondimethyl oder rac-Ethylen(2-methyl-1-indenyl)$_2$-zirkondimethyl, rac-Phenyl(methyl)silyl(2-methyl-1-indenyl)$_2$zirkondichlorid, rac-Diphenylsilyl(2-methyl-1-indenyl)-$_2$zirkondichlorid, rac-Methylethylen(2-methyl-1-indenyl)$_2$zirkondichlorid, rac-Dimethylsilyl(2-ethyl-1-indenyl)$_2$zirkondichlorid, rac-Ethylen(2-ethyl-1-indenyl)$_2$zirkondichlorid, rac-Isopropyliden(2-methyl-1-indenyl)$_2$zirkondichlorid oder rac-Phenyl(methyl)silyl(2-methyl-1-indenyl)$_2$zirkondimethyl handelt.

**4.** Verfahren zur Herstellung einer Verbindung der Formel I gemäß einem oder mehreren der Ansprüche 1 bis 3, dadurch gekennzeichnet, daß man eine Verbindung der Formel II

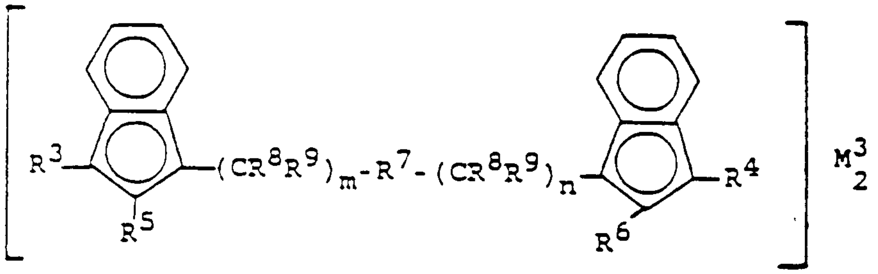

(II),

wobei $R^3$-$R^9$, m und n die in Formel I beschriebene Bedeutung haben und $M^3$ ein Alkalimetall, bevorzugt Lithium, bedeutet,

a) mit einer Verbindung der Formel III

$M^1X_4$ (III),

worin $M^1$ die in Formel I genannte Bedeutung besitzt und X ein Halogenatom, bevorzugt Chlor, bedeutet, oder

b) mit einer Verbindung der Formel IIIa

$M^1X_4L_2$ (IIIa),

worin $M^1$ und X die genannten Bedeutungen besitzen und L für einen Donorliganden steht, umsetzt und das erhaltene Reaktionsprodukt gegebenenfalls derivatisiert.

**5.** Verwendung einer Verbindung der Formel I gemäß einem oder mehreren der Ansprüche 1 bis 3 als Katalysator bei der Olefinpolymerisation.

**Patentansprüche für folgenden Vertragsstaat : ES**

**1.** Verfahren zur Herstellung einer Verbindung der Formel I

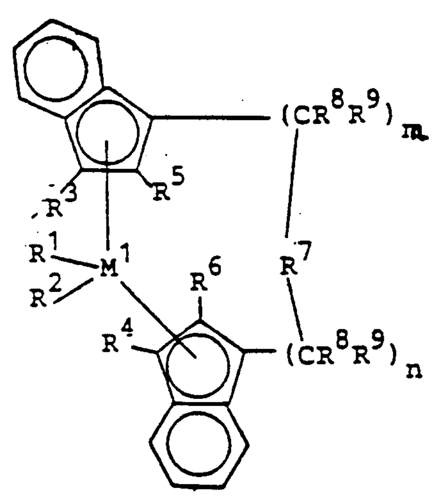

(I)

worin

$M^1$ ein Metall der Gruppe IVb, Vb oder VIb des Periodensystems ist,

$R^1$ und $R^2$ gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten,

$R^3$ und $R^4$ gleich oder verschieden sind und ein Wasserstoffatom, ein Halogenatom, eine $C_1$-$C_{10}$-Alkylgruppe, die halogeniert sein kann, eine $C_6$-$C_{10}$-Arylgruppe, einen $-NR_2{}^{10}$, $-SR^{10}$, $-OSiR_3{}^{10}$ $SiR_3{}^{10}$ oder $-PR_2{}^{10}$-Rest bedeuten, worin $R^{10}$ ein Halogenatom, eine $C_1$-$C_{10}$-Alkylgruppe oder eine $C_6$-$C_{10}$-Arylgruppe ist,

$R^5$ und $R^6$ gleich oder verschieden sind und die für $R^3$ und $R^4$ genannte Bedeutung haben, mit der Maßgabe, daß $R^5$ und $R^6$ nicht Wasserstoff sind,

$R^7$

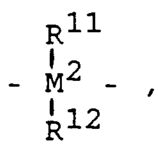 , 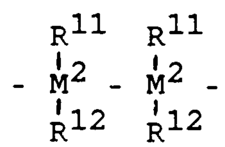 , 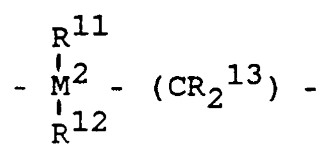 , 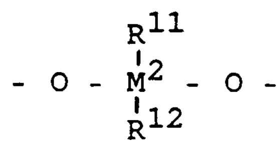

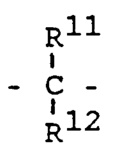 , 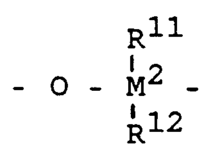 ,

$=BR^{11}$, $=AlR^{11}$, -Ge-, -Sn-, -O-, -S-, $=SO$, $=SO_2$, $=NR^{11}$, $=CO$, $=PR^{11}$ oder $=P(O)R^{11}$ ist,
wobei

$R^{11}$, $R^{12}$ und $R^{13}$ gleich oder verschieden sind und ein Wasserstoffatom, ein Halogenatom, eine $C_1$-$C_{10}$-Alkylgruppe, $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden,

$M^2$ Silizium, Germanium oder Zinn ist,

$R^8$ und $R^9$ gleich oder verschieden sind und die für $R^{11}$ genannte Bedeutung haben und m und n gleich oder verschieden sind und null, 1 oder 2 sind, wobei m plus n null, 1 oder 2 ist,

dadurch gekennzeichnet, daß man eine Verbindung der Formel II

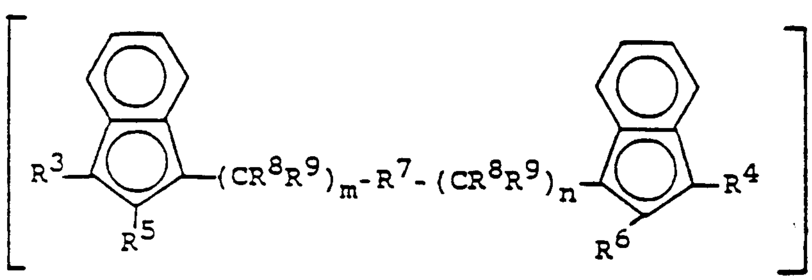 (II),

wobei $R^3$-$R^9$, m und n die in Formel I beschriebene Bedeutung haben und $M^3$ ein Alkalimetall, bevorzugt Lithium, bedeutet,

a) mit einer Verbindung der Formel III

$M^1X_4$ (III),

worin $M^1$ die in Formel I genannte Bedeutung besitzt und X ein Halogenatom, bevorzugt Chlor, bedeutet, oder

b) mit einer Verbindung der Formel IIIa

$M^1X_4L_2$ (IIIa),

worin $M^1$ und X die genannten Bedeutungen besitzen und L für einen Donorliganden steht, umsetzt und das erhaltene Reaktionsprodukt gegebenenfalls derivatisiert.

**2.** Verfahren gemäß Anspruch 1, dadurch gekennzeichnet, daß in Formel I $M^1$ Zr oder Hf, $R^1$ und $R^2$ gleich oder verschieden sind und Methyl oder Chlor, $R^3$ und $R^4$ Wasserstoff, $R^5$ und $R^6$ gleich oder verschieden sind und Methyl, Ethyl oder Trifluormethyl, $R^7$ einen Rest

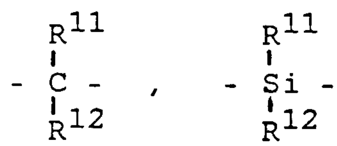

und n plus m null oder 1
bedeuten.

**3.** Verfahren gemäß Anspruch 1 oder 2, dadurch gekennzeichnet, daß es sich bei der Verbindung der Formel I um rac-Dimethylsilyl(2-methyl-1-indenyl)$_2$zirkondichlorid, rac-Ethylen(2-methyl-1-indenyl)$_2$-zirkondichlorid, rac-Dimethylsilyl(2-methyl-1-indenyl)$_2$zirkondimethyl, rac-Ethylen(2-methyl-1-indenyl)$_2$-zirkondimethyl, rac-Phenyl(methyl)silyl(2-methyl-1-indenyl)$_2$zirkondichlorid, rac-Diphenylsilyl(2-methyl-1-indenyl)$_2$zirkondichlorid, rac-Methylethylen(2-methyl-1-indenyl)$_2$zirkondichlorid, rac-Dimethylsilyl(2-ethyl-1-indenyl)$_2$zirkondichlorid, rac-Ethylen(2-ethyl-1-indenyl)$_2$zirkondichlorid, rac-Isopropyliden(2-methyl-1-indenyl)$_2$zirkondichlorid oder rac-Phenyl(methyl)silyl(2-methyl-1-indenyl)$_2$zirkonmethylhandelt.

**4.** Verwendung einer Verbindung der Formel I gemäß einem oder mehreren der Ansprüche 1 bis 3 als Katalysator bei der Olefinpolymerisation.

## Claims

**Claims for the following Contracting States : BE, DE, FR, GB, IT, NL**

**1.** A compound of the formula I

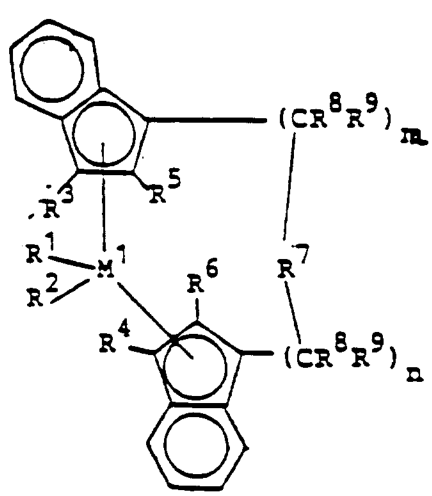

(I)

in which

| | |
|---|---|
| $M^1$ | is a metal from group IVb, Vb or VIb of the Periodic Table, |
| $R^1$ and $R^2$ | are identical or different and are a hydrogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, a $C_8$-$C_{40}$-arylalkenyl group or a halogen atom, |

$R^3$ and $R^4$ are identical or different and are a hydrogen atom, a halogen atom, a $C_1$-$C_{10}$-alkyl group, which may be halogenated, a $C_6$-$C_{10}$-aryl group, an $-NR_2{}^{10}$, $-SR^{10}$, $-OSiR_3{}^{10}$, $SiR_3{}^{10}$ or $-PR_2{}^{10}$ radical in which $R^{10}$ is a halogen atom, a $C_1$-$C_{10}$-alkyl group or a $C_6$-$C_{10}$-aryl group,

$R^5$ and $R^6$ are identical or different and are as defined for $R^3$ and $R^4$, with the proviso that $R^5$ and $R^6$ are not hydrogen,

$R^7$ is

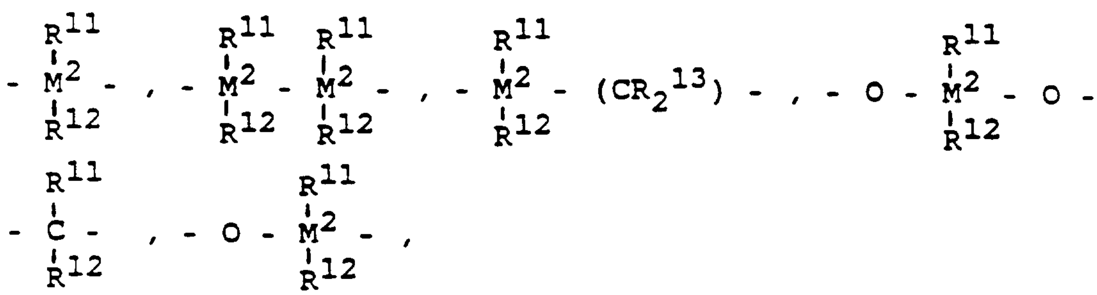

$=BR^{11}$, $=AlR^{11}$, -Ge-, -Sn-, -O-, -S-, $=SO$, $=SO_2$, $=NR^{11}$, $=CO$, $=PR^{11}$ or $=P(O)R^{11}$,

where

$R^{11}$, $R^{12}$ and $R^{13}$ are identical or different and are a hydrogen atom, a halogen atom, a $C_1$-$C_{10}$-alkyl group, $C_1$-$C_{10}$-fluoroalkyl group, a $C_6$-$C_{10}$-aryl group, a $C_6$-$C_{10}$-fluoroaryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group, or $R^{11}$ and $R^{12}$ or $R^{11}$ and $R^{13}$, in each case with the atoms connecting them, form a ring,

$M^2$ is silicon, germanium or tin,

$R^8$ and $R^9$ are identical or different and are as defined for $R^{11}$, and

m and n are identical or different and are zero, 1 or 2, m plus n being zero, 1 or 2.

**2.** A compound of the formula I as claimed in claim 1, wherein, in the formula I, $M^1$ is Zr or Hf, $R^1$ and $R^2$ are identical or different and are methyl or chlorine, $R^3$ and $R^4$ are hydrogen, $R^5$ and $R^6$ are identical or different and are methyl, ethyl or trifluoromethyl, $R^7$ is a

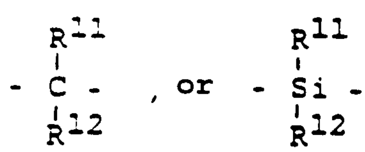

radical, and n plus m is zero or 1.

**3.** A compound of the formula I as claimed in claim 1 or 2, wherein the compound is rac-dimethylsilyl(2-methyl-1-indenyl)$_2$zirconium dichloride, rac-ethylene(2-methyl-1-indenyl)$_2$zirconium dichloride, rac-dimethylsilyl(2-methyl-1-indenyl)$_2$dimethylzirconium, rac-ethylene(2-methyl-1-indenyl)$_2$dimethylzirconium, rac-phenyl(methyl)silyl(2-methyl-1-indenyl)$_2$zirconium dichloride, rac-diphenylsilyl-(2-methyl-1-indenyl)$_2$zirconium dichloride, rac-methylethylene(2-methyl-1-indenyl)$_2$zirconiumdichloride, rac-dimethylsilyl(2-ethyl-1-indenyl)$_2$zirconium dichloride, rac-ethylene(2-ethyl-1-indenyl)$_2$zirconium dichloride, rac-isopropylidene(2-methyl-1-indenyl)$_2$zirconium dichloride or rac-phenyl(methyl)silyl(2- methyl-1-indenyl)$_2$dimethylzirconium.

**4.** A process for the preparation of a compound of the formula I as claimed in one or more of claims 1 to 3, which comprises reacting a compound of the formula II

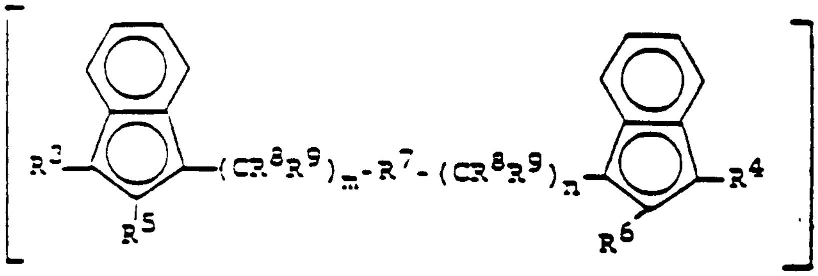

(II)

where $R^3$-$R^9$, m and n are as described in the formula I, and $M^3$ is an alkali metal, preferably lithium,

a) with a compound of the formula III

$M^1X_4$ (III)

in which $M^1$ is as defined in the formula I, and X is a halogen atom, preferably chlorine, or

b) with a compound of the formula IIIa

$M^1X_4L_2$ (IIIa)

in which $M^1$ and X are as defined above, and L is a donor ligand, and, if desired, derivatizing the resultant reaction product.

**5.** The use of a compound of the formula I as claimed in one or more of claims 1 to 3 as a catalyst in the polymerization of olefins.

**Claims for the following Contracting State : ES**

**1.** A process for the preparation of a compound of the formula I

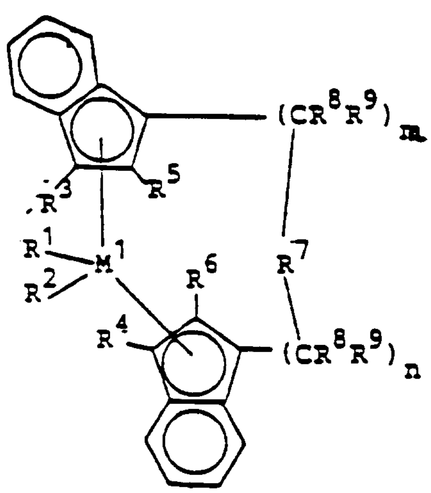

(I)

in which

| | |
|---|---|
| $M^1$ | is a metal from group IVb, Vb or VIb of the Periodic Table, |
| $R^1$ and $R^2$ | are identical or different and are a hydrogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, a $C_8$-$C_{40}$-arylalkenyl group or a halogen atom, |
| $R^3$ and $R^4$ | are identical or different and are a hydrogen atom, a halogen atom, a $C_1$-$C_{10}$-alkyl group, which may be halogenated, a $C_6$-$C_{10}$-aryl group, an $-NR_2^{10}$, $-SR^{10}$, $-OSiR_3^{10}$, $SiR_3^{10}$ or $-PR_2^{10}$ radical in which $R^{10}$ is a halogen atom, a $C_1$-$C_{10}$- |

alkyl group or a $C_6$-$C_{10}$-aryl group,

$R^5$ and $R^6$ are identical or different and are as defined for $R^3$ and $R^4$, with the proviso that $R^5$ and $R^6$ are not hydrogen,

$R^7$ is

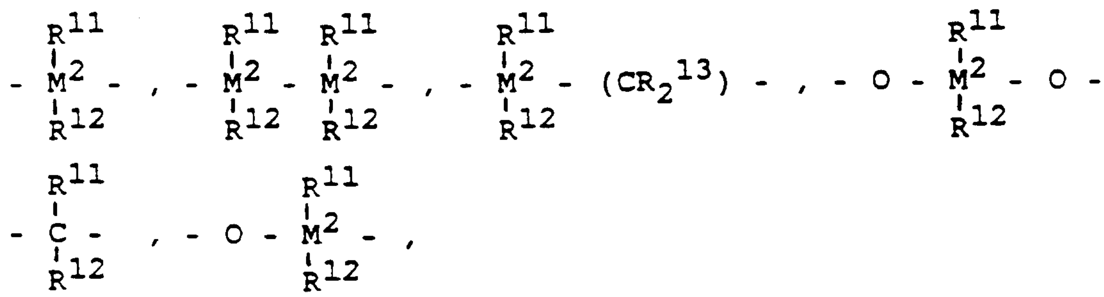

=$BR^{11}$, =$AlR^{11}$, -Ge-, -Sn-, -O-, -S-, =SO, =$SO_2$, =$NR^{11}$, =CO, =$PR^{11}$ or =$P(O)R^{11}$,

where

$R^{11}$, $R^{12}$ and $R^{13}$ are identical or different and are a hydrogen atom, a halogen atom, a $C_1$-$C_{10}$-alkyl group, $C_1$-$C_{10}$-fluoroalkyl group, a $C_6$-$C_{10}$-aryl group, a $C_6$-$C_{10}$-fluoroaryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group, or $R^{11}$ and $R^{12}$ or $R^{11}$ and $R^{13}$, in each case with the atoms connecting them, form a ring,

$M^2$ is silicon, germanium or tin,

$R^8$ and $R^9$ are identical or different and are as defined for $R^{11}$, and

m and n are identical or different and are zero, 1 or 2, m plus n being zero, 1 or 2,

which comprises reacting a compound of the formula II

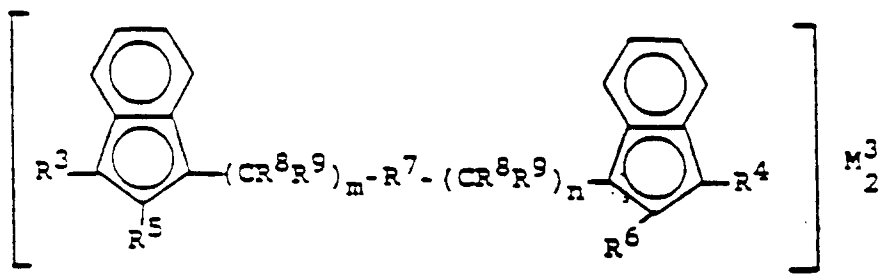

(II)

where $R^3$-$R^9$, m and n are as described in the formula I, and $M^3$ is an alkali metal, preferably lithium,

a) with a compound of the formula III

$M^1X_4$ (III)

in which $M^1$ is as defined in the formula I, and X is a halogen atom, preferably chlorine, or

b) with a compound of the formula IIIa

$M^1X_4L_2$ (IIIa)

in which $M^1$ and X are as defined above, and L is a donor ligand,

and, if desired, derivatizing the resultant reaction product.

**2.** The process as claimed in claim 1, wherein, in the formula I, $M^1$ is Zr or Hf, $R^1$ and $R^2$ are identical or different and are methyl or chlorine, $R^3$ and $R^4$ are hydrogen, $R^5$ and $R^6$ are identical or different and are methyl, ethyl or trifluoromethyl, $R^7$ is a

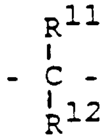 , or 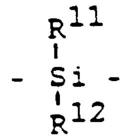

radical, and n plus m is zero or 1.

**3.** The process as claimed in claim 1 or 2, wherein the compound of the formula I is rac-dimethylsilyl(2-methyl-1-indenyl)$_2$zirconium dichloride, rac-ethylene(2-methyl-1-indenyl)$_2$zirconium dichloride, rac-dimethylsilyl(2-methyl-1-indenyl)$_2$dimethylzirconium, rac-ethylene(2-methyl-1-indenyl)-$_2$dimethylzirconium, rac-phenyl(methyl)silyl(2-methyl-1-indenyl)$_2$zirconium dichloride, rac-diphenylsilyl-(2-methyl-1-indenyl)$_2$zirconium dichloride, rac-methylethylene(2-methyl-1-indenyl)$_2$zirconiumdichloride, rac-dimethylsilyl(2-ethyl-1-indenyl)$_2$zirconium dichloride, rac-ethylene(2-ethyl-1-indenyl)$_2$zirconium dichloride, rac-isopropylidene(2-methyl-1-indenyl)$_2$zirconium dichloride or rac-phenyl(methyl)silyl(2-methyl-1-indenyl)$_2$methylzirconium.

**4.** The use of a compound of the formula I as claimed in one or more of claims 1 to 3 as a catalyst in the polymerization of olefins.

**Revendications**

**Revendications pour les Etats contractants suivants : BE, DE, FR, GB, IT, NL**

**1.** Composé de formule I :

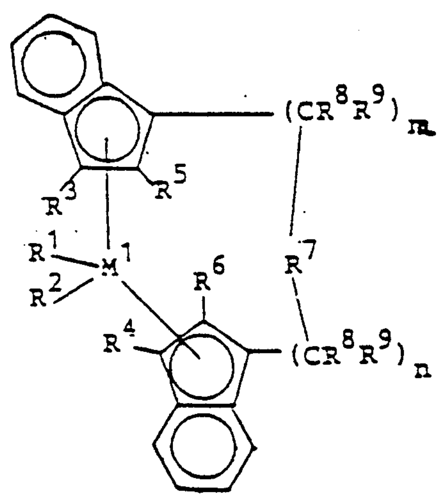

(I)

dans laquelle

| | |
|---|---|
| $M^1$ | représente un métal du groupe IVb, Vb ou VIb de la classification périodique des éléments, |
| $R^1$ et $R^2$ | sont identiques ou différents et représentent un atome d'hydrogène, un groupe alkyle en $C_1$-$C_{10}$, un groupe alcoxy en $C_1$-$C_{10}$, un groupe aryle en $C_6$-$C_{10}$, un groupe aryloxy en $C_6$-$C_{10}$, un groupe alcényle en $C_2$-$C_{10}$, un groupe arylalkyle en $C_7$-$C_{40}$, un groupe alkylaryle en $C_7$-$C_{40}$, un groupe arylalcényle en $C_8$-$C_{40}$ ou un atome d'halogène, |
| $R^3$ et $R^4$ | sont identiques ou différents et représentent un atome d'hydrogène, un atome d'halogène, un groupe alkyle en $C_1$-$C_{10}$, qui peut être halogéné, un groupe aryle en $C_6$-$C_{10}$, un radical $-NR_2^{10}$, $-SR^{10}$, $-OSiR_3^{10}$ $SiR_3^{10}$ ou $-PR_2^{10}$ où $R^{10}$ représente un atome d'halogène, un groupe alkyle en $C_1$-$C_{10}$ ou un groupe aryle en $C_6$-$C_{10}$, |
| $R^5$ et $R^6$ | sont identiques ou différents et ont la signification donnée pour $R^3$ et $R^4$, à la condition que $R^5$ et $R^6$ ne soient pas l'hydrogène, |

$R^7$

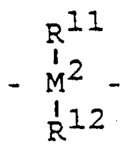 , 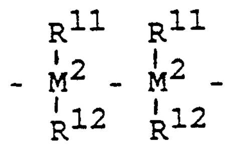 , 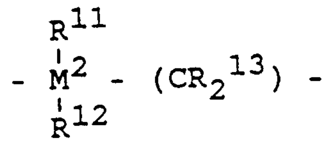 , 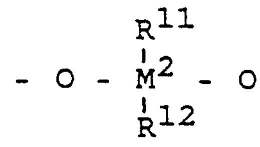

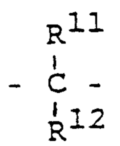 , 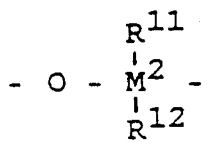 ,

| | |
|---|---|
| | $=BR^{11}$, $=AlR^{11}$, -Ge-, -Sn-, -O-, -S-, =SO, $=SO_2$, $=NR^{11}$, =CO, $=PR^{11}$ ou $=P(O)R^{11}$ où |
| $R^{11}$, $R^{12}$ et $R^{13}$ | sont identiques ou différents et représentent un atome d'hydrogène, un atome d'halogène, un groupe alkyle en $C_1$-$C_{10}$, un groupe fluoroalkyle en $C_1$-$C_{10}$, un groupe aryle en $C_6$-$C_{10}$, un groupe fluoroaryle en $C_6$-$C_{10}$, un groupe alcoxy en $C_1$-$C_{10}$, un groupe alcényle en $C_2$-$C_{10}$, un groupe arylalkyle en $C_7$-$C_{40}$, un groupe arylalcényle en $C_8$-$C_{40}$, un groupe alkylaryle en $C_7$-$C_{40}$ ou $R^{11}$ et $R^{12}$ ou $R^{11}$ et $R^{13}$, respectivement, avec l'atome qui les relie, forment un cycle, |
| $M^2$ | est le silicium, le germanium ou l'étain, |
| $R^8$ et $R^9$ | sont identiques ou différents et ont la signification donnée pour $R^{11}$ et |
| m et n | sont identiques ou différents et valent zéro, 1 ou 2, m plus n étant zéro, 1 ou 2. |

**2.** Composé de formule I selon la revendication 1, caractérisé en ce que, dans la formule I, $M^1$ représente Zr ou Hf, $R^1$ et $R^2$ sont identiques ou différents et sont le méthyle ou le chlore, $R^3$ et $R^4$ sont l'hydrogène, $R^5$ et $R^6$ sont identiques ou différents et sont le méthyle, l'éthyle ou le trifluorométhyle, $R^7$ représente un radical

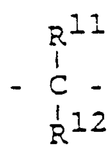 , 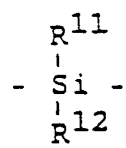

et n plus m valent zéro ou 1.

**3.** Composé de formule I selon la revendication 1 ou 2 caractérisé en ce qu'il s'agit de dichlorure de rac-diméthylsilyl-(2-méthyl-1-indényl)$_2$-zirconium, de dichlorure de rac-éthylène-(2-méthyl-1-indényl)$_2$-zirconium, de rac-diméthylsilyl-(2-méthyl-1-indényl)$_2$-zirconium-diméthyle ou de rac-éthylène-(2-méthyl-1-indényl)$_2$-zirconium-diméthyle, de dichlorure de rac-phényl-(méthyl)-silyl-(2-méthyl-1-indényl)$_2$-zirconium, de dichlorure de rac-diphénylsilyl-(2-méthyl-1-indényl)$_2$-zirconium, de dichlorure de rac-méthyléthylène-(2-méthyl-1-indényl)$_2$-zirconium, de dichlorure de rac-diméthylsilyl-(2-éthyl-1-indényl)$_2$-zirconium, de dichlorure de rac-éthylène-(2-éthyl-1-indényl)$_2$-zirconium, de dichlorure de rac-isopropylidène-(2-méthyl-1-indényl)$_2$-zirconium ou de rac-phényl-(méthyl)-silyl-(2-méthyl-1-indényl)$_2$-zirconium-diméthyle.

**4.** Procédé pour la préparation d'un composé de formule I, selon une ou plusieurs des revendications 1 à 3, caractérisé en ce qu'on fait réagir un composé de formule II :

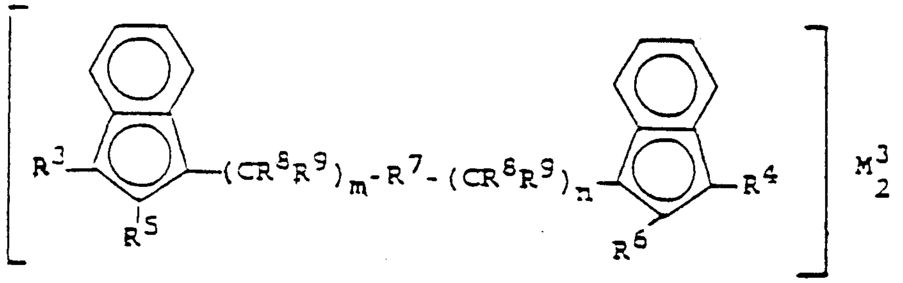

(II),

où $R^3$-$R^9$, m et n ont la signification décrite dans la formule I, et $M^3$ est un métal alcalin, de préférence le lithium,

a) avec un composé de formule III

$M^1X_4$ (III),

où $M^1$ a la signification donnée dans la formule I et X représente un atome d'halogène, de préférence le chlore, ou

b) avec un composé de formule IIIa :

$M^1X_4L_2$ (IIIa),

où $M^1$ et X ont les significations précitées et L représente un ligand donneur, et éventuellement on transforme en dérivé le produit obtenu.

**5.** Utilisation d'un composé de formule I selon une ou plusieurs des revendications 1 à 3, en tant que catalyseur pour la polymérisation d'oléfines.

**Revendications pour l'Etat contractant suivant : ES**

**1.** Procédé pour la préparation d'un composé de formule I :

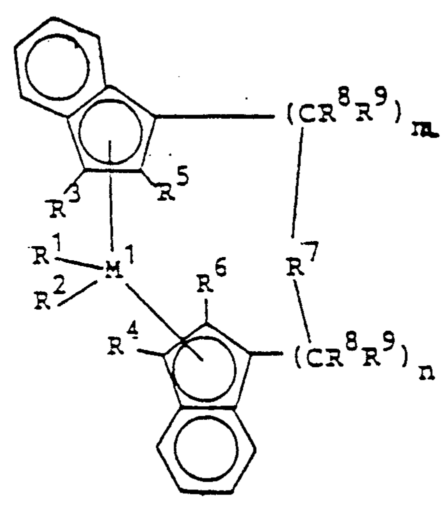

(I)

dans laquelle

$M^1$ représente un métal du groupe IVb, Vb ou VIb de la classification périodique des éléments,

$R^1$ et $R^2$ sont identiques ou différents et représentent un atome d'hydrogène, un groupe alkyle en $C_1$-$C_{10}$, un groupe alcoxy en $C_1$-$C_{10}$, un groupe aryle en $C_6$-$C_{10}$, un groupe aryloxy en $C_6$-$C_{10}$, un groupe alcényle en $C_2$-$C_{10}$, un groupe arylalkyle en $C_7$-$C_{40}$, un groupe alkylaryle en $C_7$-$C_{40}$, un groupe arylalcényle en $C_8$-$C_{40}$ ou un atome d'halogène,

$R^3$ et $R^4$ sont identiques ou différents et représentent un atome d'hydrogène, un atome d'halogène, un groupe alkyle en $C_1$-$C_{10}$, qui peut être halogéné, un groupe aryle en $C_6$-$C_{10}$, un radical $-NR_2^{10}$, $-SR^{10}$, $-OSiR_3^{10}$, $SiR_3^{10}$ ou $-PR_2^{10}$, où $R^{10}$ représente un atome d'halogène, un groupe alkyle en $C_1$-$C_{10}$ ou un groupe aryle en $C_6$-$C_{10}$,

$R^5$ et $R^6$ sont identiques ou différents et ont la signification donnée pour $R^3$ et $R^4$, à la condition que $R^5$ et $R^6$ ne soient pas l'hydrogène,

$R^7$

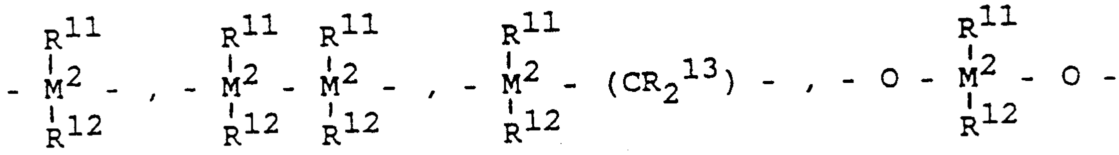

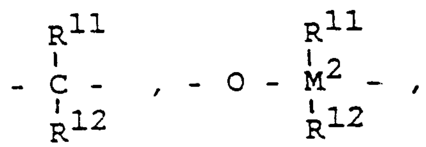

$=BR^{11}$, $=AlR^{11}$, -Ge-, -Sn-, -O-, -S-, =SO, $=SO_2$, $=NR^{11}$, =CO, $=PR^{11}$ ou $=P(O)R^{11}$

où

$R^{11}$, $R^{12}$ et $R^{13}$ sont identiques ou différents et représentent un atome d'hydrogène, un atome d'halogéne, un groupe alkyle en $C_1$-$C_{10}$, un groupe fluoroalkyle en $C_1$-$C_{10}$, un groupe aryle en $C_6$-$C_{10}$, un groupe fluoroaryle en $C_6$-$C_{10}$, un groupe alcoxy en $C_1$-$C_{10}$, un groupe alcényle en $C_2$-$C_{10}$, un groupe arylalkyle en $C_7$-$C_{40}$, un groupe arylalcényle en $C_8$-$C_{40}$, un groupe alkylaryle en $C_7$-$C_{40}$ ou $R^{11}$ et $R^{12}$ ou $R^{11}$ et $R^{13}$, respectivement, avec l'atome qui les relie, forment un cycle,

$M^2$ est le silicium, le germanium ou l'étain,

$R^8$ et $R^9$ sont identiques ou différents et ont la signification donnée pour $R^{11}$ et

m et n sont identiques ou différents et valent zéro, 1 ou 2, m plus n étant zéro, 1 ou 2.

caractérisé en ce qu'on fait réagir un composé de formule II :

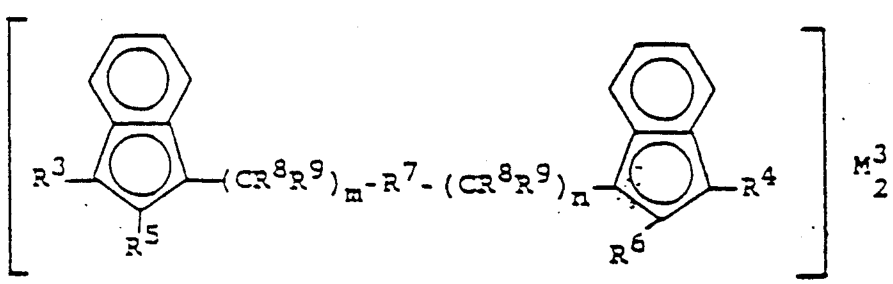

(II),

où $R^3$-$R^9$, m et n ont la signification décrite dans la formule I et $M^3$ est un métal alcalin, de préférence le lithium,

a) avec un composé de formule III :

$M^1X_4$ (III),

où $M^1$ a la signification donnée dans la formule I et X représente un atome d'halogène, de préférence le chlore, ou

b) avec un composé de formule IIIa :

$M^1X_4L_2$ (IIIa),

où $M^1$ et X ont les significations précitées et L représente un ligand donneur, et éventuellement on transforme en dérivé le produit obtenu.

**2.** Composé de formule I selon la revendication 1, caractérisé en ce que dans la formule I, $M^1$ représente Zr ou Hf, $R^1$ et $R^2$ sont identiques ou différents et sont le méthyle ou le chlore, $R^3$ et $R^4$ sont l'hydrogène, $R^5$ et $R^6$ sont identiques ou différents et sont le méthyle, l'éthyle ou le trifluorométhyle, $R^7$ représente un radical

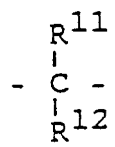 , 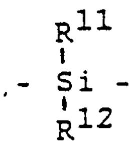

et n plus m valent zéro ou 1.

**3.** Composé de formule I selon la revendication 1 ou 2, caractérisé en ce qu'il s'agit de dichlorure de rac-diméthylsilyl-(2-méthyl-1-indényl)$_2$-zirconium, de dichlorure de rac-éthylène-(2-méthyl-1-indényl)$_2$-zirconium, de rac-diméthylsilyl-(2-méthyl-1-indényl)$_2$-zirconiumdiméthyle, de rac-éthylène-(2-méthyl-1-indényl)$_2$-zirconium-diméthyle, de dichlorure de rac-phényl-(méthyl)silyl-(2-méthyl-1-indényl)$_2$-zirconium, de dichlorure de rac-diphénylsilyl-(2-méthyl-1-indényl)$_2$-zirconium, de dichlorure de rac-méthyléthylène-(2-méthyl-1-indényl)$_2$-zirconium, de dichlorure de rac-diméthylsilyl-(2-éthyl-1-indényl)$_2$-zirconium, de dichlorure de rac-éthylène-(2-éthyl-1-indényl)$_2$-zirconium, de dichlorure de rac-isopropylidène-(2-méthyl-1-indényl)$_2$-zirconium ou de rac-phényl-(méthyl)-silyl-(2-méthyl-1-indényl)$_2$-zirconium-diméthyle.

**4.** Utilisation d'un composé de formule I selon une ou plusieurs des revendications 1 à 3 en tant que catalyseur pour la polymérisation d'oléfines.